# EUROPEAN PATENT SPECIFICATION

(11) **EP 4 581 272 B1**
(45) Date of publication and mention of the grant of the patent: **18.03.2026**
(21) Application number: 23761829.3
(22) Date of filing: 23.08.2023
(51) Int. Cl.: F03D 9/00, H02S 10/12

(54) **AN ENERGY HARVESTING UNIT**
ENERGIEGEWINNUNGSEINHEIT
UNITÉ DE RÉCUPÉRATION D'ÉNERGIE

(30) Priority: 29.08.2022 DK PA202200795
(43) Date of publication of application: 09.07.2025
(73) Proprietor: GRØN UDVIKLING AF 1/11 2020 APS, 8700 Horsens (DK)
(72) Inventor: RASMUSSEN, Henning Baltzer, 8700 Horsens (DK)
(74) Representative: Larsen & Birkeholm A/S
(86) International application number: PCT/EP2023/073155
(87) International publication number: WO 2024/046847

(56) References cited:
- WO-A1-2019/155883
- WO-A2-2009/001225
- CN-A- 115 085 634
- JP-A- 2015 205 632
- US-A- 4 786 795
- US-A1- 2009 015 019
- US-A1- 2009 223 508
- US-A1- 2010 132 695
- US-A1- 2010 307 153
- US-A1- 2010 307 566
- US-A1- 2017 040 926
- US-A1- 2017 355 426

## Description

### Technical field of the invention

The present invention relates to an energy harvesting unit, such as solar cell and/or wind turbine assemblies. In particular, the invention relates to an energy harvesting unit that is adjustable relative to solar radiation or wind direction.

### Background of the invention

Energy harvesting units, such as solar panels, or wind turbines, are traditionally mounted on roofs, placed on agricultural land, or at sea. While traditional applications allow for generation of energy depending on solar radiation in the specific environment where the solar panels are located, the applications are often fixed in pre-determined positions and provide a low degree of flexibility. This is also an issue for transverse flow wind turbines mounted on roofs.

Generally, efficiency of solar panels is dependent on various factors, such as latitude, season, day length and other contributing factors that influence solar radiation influx in solar cells. Fixed and pre-determined positions of traditional solar panels may in certain circumstances be inefficient and hence require more expensive solar cells or an increased area of solar cells.

Energy efficiency, both in terms of optimization of individual solar cells and larger solar parks, has been in focus in recent years. However, common to most of the research and interest in the area is that focus has been limited to addressing conversion of solar radiation as such into energy in the most efficient way.

Demands for flexibility and usability in various locations are increasingly a topic of recent discussions. While existing solar panels may be effective as such, there is still a need for individualized solutions that may improve energy efficiency significantly without use of expensive solar cells and which may be placed in flexible locations depending on the consumer's needs. The same issues are present for wind turbines.

Additionally, there is a need for applications that may be placed in locations or positions where they may generate more energy. These locations may often accomplish less expensive and more convenient maintenance and repair when required than for instance when placed on building roofs.

It is therefore desirable to provide a solution, which can solve above mentioned problems. Other examples of prior art solutions can be found in documents US 2010/307566 A1, US 2017/355426 A1, US 2010/307153 A1 and US 2009/223508 A1.

### Detailed description of the invention

A first aspect relates to an energy harvesting unit according to claim 1.

An example relates to an energy harvesting unit comprising:
- a tank with walls defining a cavity and an upper edge, the tank comprising a liquid, such as water, within its cavity, said liquid defining a substantially horizontal surface within the cavity of said tank;
- a chassis adapted for floating a) on the surface of said liquid, or b) within said liquid;
- a solar panel and/or a transverse flow wind turbine operably mounted to said chassis; and
- positioning means adapted for rotating said chassis on the surface of said liquid and/or within said liquid.

One of the advantages of the invention is that a solar panel and/or a transverse flow wind turbine may rotate around a central axis and follow the most optimal solar radiation pattern, or the wind direction, respectively. Hence, the energy harvesting unit may be optimized to sunrise and sunset, and/or wind direction in the individual location where it is situated, and in that way generate more energy than stationary applications, for instance on building roofs, or in solar parks in agricultural locations.

Another advantage is that the energy harvesting unit may benefit from solar radiation and/or wind for a longer period than units that are fixed. Yet another advantage is that the energy harvesting unit may be customized to seasonal variations and may be equipped with less expensive solar cells with the same or more energy generation compared to expensive and vulnerable very energy efficient solar cells.

The tank or liquid reservoir may be a container of water where one or more floating or buoyancy members may, as an example, be embodied as a pontoon or pontoons that are able to rotate in the container filled with water. In that way, the solar panels may be allowed to point in the direction of solar influx, or the transverse flow wind turbine may be allowed to point in the direction of incoming wind. The use of a liquid reservoir may result in a very energy efficient and inexpensive way of rotating the energy harvesting unit. Other embodiments may also be considered within the scope of the invention, such as an annular tank of water to hold the one or more floating or buoyancy members that allow rotation in the same way. This embodiment is described and exemplified in more detail below.

In one embodiment of the invention, the energy harvesting unit further comprises an annular liquid reservoir adapted for receiving the chassis' one or more floating or buoyancy members, thereby allowing the chassis to rotate in a horizontal plane around a central axis during operation, optionally mounted with one or more floating member stoppers.

One of the advantages associated with an annular liquid reservoir is that less liquid, such as water, may be applied without compromising the rotational forces. Another advantage is that an annular ring of liquid may accommodate more stability to the chassis. Other advantages include that less expensive materials may be employed. For instance, the annular tank may be made of a plastic, and preferably extruded as a gutter or half-pipe. In such an embodiment, the one or more floating or buoyancy members may be configured as a plastic pipe shaped in a similar manner as the gutter or half-pipe, optionally filled with an insulation foam or the like. A locking mechanism, such as a stopper adapted to engage with the floating or buoyancy member, may be present for use during extreme weather conditions to secure the chassis to the tank.

In some embodiments of the invention, the driving force (rotational mechanism) of the positioning means of the energy harvesting unit may be a motor unit fastened to a central attachment point, e.g., a rod mounted to/within the ground, or sea- or lakebed, and operably connected to the chassis. In other embodiments, other types of positioning means may be present, such as motor unit comprising a motor operated drive wheel located at the outer periphery of the energy harvesting unit, e.g., mounted to the ground or to the tank and operably connected to the chassis.

In one or more embodiments, the tank is adapted for floating in a body of water, such as the sea or a lake.

In one or more embodiments, the tank is adapted for positioning at least partly underground.

In one or more embodiments, the tank is a slurry tank. This embodiment may be seen as a multifunctional cover for a slurry tank.

In one or more embodiments, the positioning means is mounted to the upper edge of the tank and operably connected to the chassis.

In one or more embodiments, the positioning means is configured for back-and-forth rotational movement of the chassis, said movement mimicking the sun path.

In one or more embodiments, the chassis is adapted for covering the mayor part of the surface area of said liquid, such as at least 70% of the surface area of said liquid, preferably within the range of 75-100% of the surface area of said liquid, such as at least 80% of the surface area of said liquid, more preferably within the range of 85-100% of the surface area of said liquid, such as at least 90% of the surface area of said liquid, more preferably within the range of 95-100% of the surface area of said liquid.

In one or more embodiments, the energy harvesting unit comprises both a solar panel and a transverse flow wind turbine operably mounted to the chassis. Advantageously, the energy harvesting unit further comprises a control unit configured to instruct the positioning means to position the solar panel and transverse flow wind turbine in a specific direction in response to received data selected from the group consisting of: weather conditions, weather forecasts, time of day, date, current produced amount of energy of the solar panel, average produced amount of energy of the solar panel within a pre-determined time period, current produced amount of energy of the transverse flow wind turbine, average produced amount of energy of the transverse flow wind turbine within a pre-determined time period, and wind speed. In this way, the energy harvesting unit can be controlled for optimal energy production at any given time. Different types of known and generally available sensors may be used for such purposes, such as light sensors, temperature sensors, timers, and wind speed sensors. The control unit may be operably connected to such sensors and thereby receive the wanted information/data. In some embodiments, the control unit may be connected to a cloud server or service through which information/data may be received about weather forecasts. In some embodiments, the control unit may send sensor data to the cloud server or service for analysis and receive the outcome of such analysis as data for further processing or instructions about how to operate, i.e., turn, the chassis to optimize energy production, or to avoid damage if e.g., the wind is too strong for recommended operation.

In one or more embodiments, the control unit is configured to prioritize the production of energy with the solar panel until the production falls below a preset threshold value.

In one or more embodiments, the transverse flow wind turbine is positioned above the solar panel.

In one or more embodiments, the solar panel is positioned such that incoming wind is directed towards the transverse flow wind turbine.

In one or more embodiments, the tank is adapted for receiving and storing rainwater, preferably for reuse.

In one or more embodiments, the tank comprises a tank overflow outlet, preferably operably connected to a rainwater sewer system.

In one or more embodiments, the tank comprises a second tank outlet, preferably operably connected to a rainwater sewer system, positioned at a lower level than the tank overflow outlet, wherein said second tank outlet is dimensioned with a flow capacity being substantially lower than that of the tank overflow outlet. The advantage of this embodiment is to delay the rainwater entry into a sewer to reduce the maximal loading of the sewer system, e.g., during heavy rainfall. The rainwater my be collected from the nearby surroundings, such as from a roof or from a paved surface. The rainwater may be pumped into the tank, or run directly into the tank via pipes.

In one or more embodiments, the tank is circular in shape, wherein the chassis is of a shape corresponding to the shape of the tank, and wherein the chassis is adapted for covering the mayor part of the surface area of said liquid, such as at least 90% of the surface area of said liquid, thereby being able to rotate unhindered within said tank.

In one or more embodiments, the chassis is adapted for floating freely, such as without any anchoring means, a) on the surface of said liquid and/or b) within said liquid. The chassis may e.g., comprise a sandwich panel, preferably comprising an insulating material, such as a foam board, sandwiched between two metal (aluminum or stainless steel) plates. Apart from preventing the liquid, such as water, in the tank from freezing at the liquid surface (water surface), it is also very difficult to lift (e.g., by the wind) away from the liquid surface due to several factors related to buoyancy, surface tension, and fluid dynamics. This embodiment thereby allows the chassis to float freely on the liquid surface.

In one or more embodiments, the tank comprises one or more support structures extending upwards from the bottom of the tank, said support structures adapted for supporting the chassis if the water level in the tank falls below a preset depth. This embodiment allows the use of all the water if needed for e.g., an emergency situation to fight a fire.

In one or more embodiments, the chassis is coated with a solar reflective material, such as a white coating, and wherein said solar panel (solar cell) is preferably bifacial.

In one or more embodiments, the chassis is made of a solar reflective material, such as a white polymeric foam, and wherein said solar panel (solar cell) is preferably bifacial.

Particularly, when used offshore, the solar panels may benefit from reflections on the water and thereby may gain more efficiency compared to solutions without possibility of energy generation from the backside of the solar modules or solar panels. In some embodiments, the solar units are raised above the sea- or lake level in order to increase efficiency from reflection.

In one or more embodiments, the energy harvesting unit comprises one or more bifacial solar modules and/or one or more bifacial solar panels, preferably angularly adjustable relative to the chassis.

In one or more embodiments, at least a part of the chassis is configured as a service platform for a technician to walk and stand on.

In some embodiments of the invention, where the energy harvesting unit barrier is positioned at sea or at a lake, means are provided around the energy harvesting unit to prevent or limit waves from damaging components of the energy harvesting unit. For instance, there may be provided buoyancy barriers in a circle around the energy harvesting unit, thereby providing calm water around the chassis.

In some embodiments of the invention, the central attachment point is configured for being vertically adjustable to tidal water.

In some embodiments of the invention, the one or more solar modules and/or solar panels are fixed in an angle relative to the chassis. This may be particularly useful when very large energy harvesting units are employed and where the chassis at the same time is rotated around a central axis. Here, rotation of the chassis is sufficient to provide adequate solar radiation to the solar panels. In some embodiments of the invention, the angle between the one or more solar modules and/or solar panels and the chassis may be adjusted to seasonal changes on a regular basis, such as one or two times each year.

In some embodiments of the invention, the one or more solar modules and/or solar panels are angularly adjustable relative to the chassis, in order to accommodate more efficient usage of solar radiation. The adjustment may be automatic and controlled by a control unit, e.g., configured to adjust the angle between the one or more solar modules and/or solar panels and the chassis in response to predefined rules, such as a threshold value of current energy harvest. In some cases, the panels may be lowered to be aligned with the ground or sea level, for instance during storms or extreme weather conditions. In general (e.g., also for units without solar panels), the control unit, or alternatively another control unit, may be configured to activate the positioning means in response to information about wind speed. As an example, the control unit is configured to orient the chassis in a position that is more resistant to incoming wind than another position, e.g., in a situation where a wind speed is registered to be above a predefined threshold value. The control unit may comprise one or more wind speed sensors.

In one or more embodiments, the energy harvesting unit further comprises one or more solar reflectors and/or solar magnifying members. By amplifying solar radiation for instance onshore, the system may be able to generate energy in situations with low intensity of solar radiation.

In some embodiments of the invention, the energy harvesting unit further comprises a transverse flow wind turbine operably mounted to the chassis, e.g., in combination with solar panels also operably mounted to the chassis. In some embodiments, the transverse flow wind turbine is positioned at the top of a solar panel. Depending on the angle of the solar panel relative to the chassis, an increased wind velocity may be obtained when the wind travels along a solar panel and reaches the transverse flow wind turbine situated in extension of the solar panel. One of the advantages of combining solar panels with transverse flow wind turbines is that an increased energy harvesting efficiency may be obtained. Hence, this embodiment harvests both solar energy and wind energy. In some embodiments, the solar panels and the transverse flow wind turbines are connected to the same inverter system. This gives the advantage that the integrated system may utilize energy in a coordinated way. The energy harvesting unit may comprise a control unit configured for prioritizing the optimal position of the chassis relative to either solar energy harvesting or wind energy harvesting. For instance, when there is less sun radiation, such as during the night or on cloudy days, the wind energy harvesting may be prioritized. In other cases, the two options may complement each other in generation of energy, such as by adjusting the system in direction of the most energy generating power.

In some embodiments of the invention, an energy harvesting unit park is provided comprising multiple energy harvesting units. In some embodiments of the invention, the individual energy harvesting units may be positioned at different heights. In some embodiments of the invention, the individual energy harvesting units are positioned in a pattern. These embodiments may optimize the efficiency.

In one or more embodiments, the energy harvesting unit further comprises a solar panel alignment means operably connected to a solar panel, wherein said solar panel alignment means comprises a first chamber, a second chamber, and a pump unit, wherein said pump unit is configured to distribute fluid from one chamber to the other chamber, or vice versa, in order to change the tilt angle of said solar panel.

As used in the specification and the appended claims, the singular forms "a", "an", and "the" include plural referents unless the context clearly dictates otherwise. Ranges may be expressed herein as from "about" or "approximately" one particular value and/or to "about" or "approximately" another particular value. When such a range is expressed, another embodiment includes from the one particular value and/or to the other particular value. Similarly, when values are expressed as approximations, by use of the antecedent "about", it will be understood that the particular value forms another embodiment.

It should be noted that embodiments and features described in the context of one of the aspects of the present invention also apply to the other aspects of the invention.

### Brief description of the figures

The invention will be understood in greater detail with reference to the following figures that serve to illustrate certain particular embodiments of the invention by way of example:
Figure 1a illustrates a cross-sectional side view of an energy harvesting unit in accordance with various embodiments of the invention, where the chassis is in a first position relative to the tank's two compartments.
Figure 1b illustrates a cross-sectional side view of an energy harvesting unit in accordance with various embodiments of the invention, where the chassis is in a second position relative to the tank's two compartments.
Figure 1c is a closeup view of Fig. 1a.
Figure 1d illustrates a top view of an energy harvesting unit in accordance with various embodiments of the invention, where the chassis is in a first position relative to the tank's two compartments.
Figure 1e illustrates a top view of an energy harvesting unit in accordance with various embodiments of the invention, where the chassis is in a second position relative to the tank's two compartments.
Figure 2a illustrates a cross-sectional side view of an energy harvesting unit in accordance with various embodiments of the invention, where the chassis is in a first position relative to the tank's single compartment.
Figure 2b illustrates a top view of an energy harvesting unit in accordance with various embodiments of the invention, where the chassis is in a first position relative to the tank's single compartment.
Figure 3a illustrates a cross-sectional side view of an energy harvesting unit in accordance with various embodiments of the invention, where the chassis is in a first position relative to the tank's compartment.
Figure 3b illustrates a side view of an energy harvesting unit in accordance with various embodiments of the invention, where the chassis is in a second position relative to the tank's compartment.
Figure 3c illustrates a top view of an energy harvesting unit in accordance with various embodiments of the invention, where the chassis is in a first position relative to the tank's compartment.
Figure 3d illustrates a top view of an energy harvesting unit in accordance with various embodiments of the invention, where the chassis is in a second position relative to the tank's compartment.
Figure 4 illustrates a perspective view of an energy harvesting unit in accordance with various embodiments of the invention.
Figure 5 illustrates a perspective view of an energy harvesting unit in accordance with various embodiments of the invention, where both solar panels and transverse flow wind turbines are present.
Figure 6 illustrates a cross-sectional side view of an energy harvesting unit in accordance with various embodiments of the invention.
Figure 7a illustrates a top view of an energy harvesting unit in accordance with various embodiments of the invention.
Figure 7b illustrates a cross-sectional side view of an energy harvesting unit in accordance with various embodiments of the invention.
Figure 8a illustrates a cross-sectional side view of an energy harvesting unit in accordance with various embodiments of the invention.
Figure 8b illustrates a top view of an energy harvesting unit in accordance with various embodiments of the invention.
Figure 9 illustrates a cross-sectional side view of an energy harvesting unit in accordance with various embodiments of the invention.
Figure 10 illustrates a cross-sectional side view of an energy harvesting unit in accordance with various embodiments of the invention.
Figure **11** illustrates a top view of an energy harvesting unit in accordance with various embodiments of the invention.

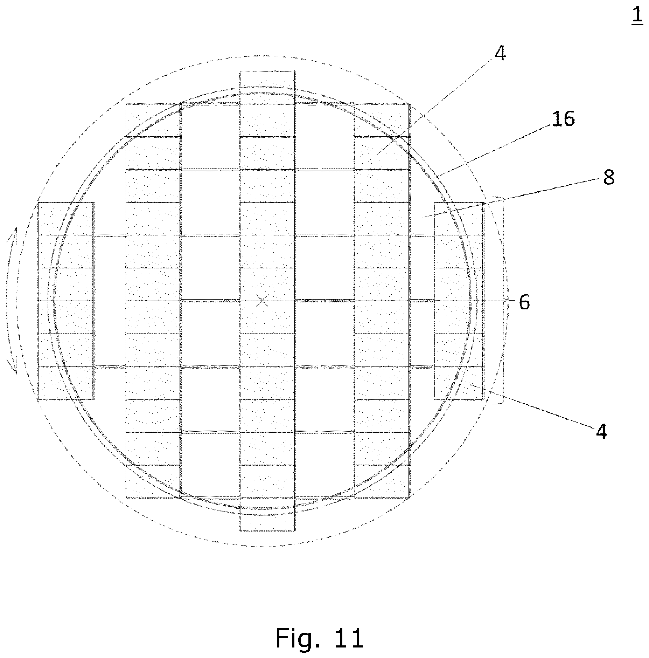

Figures 11-14 illustrate cross-sectional side views of an energy harvesting unit in accordance with various embodiments of the invention.

### Detailed description of the figures

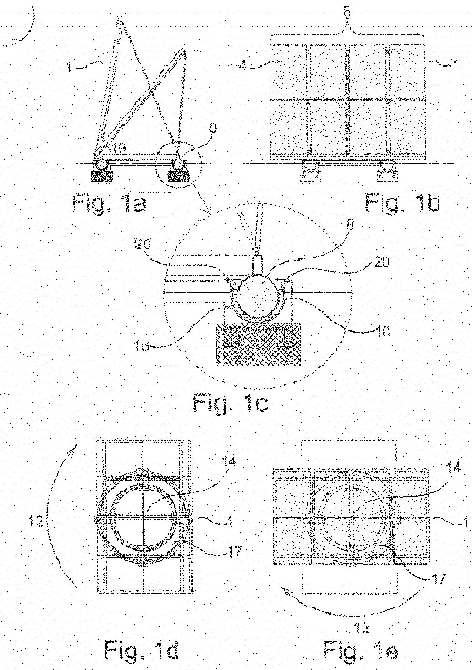

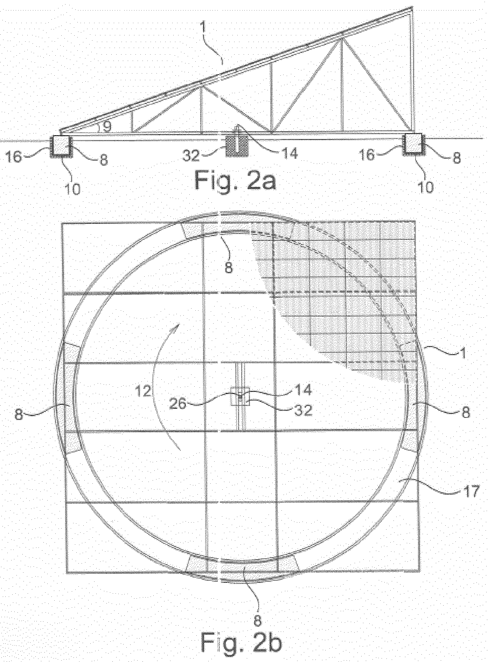

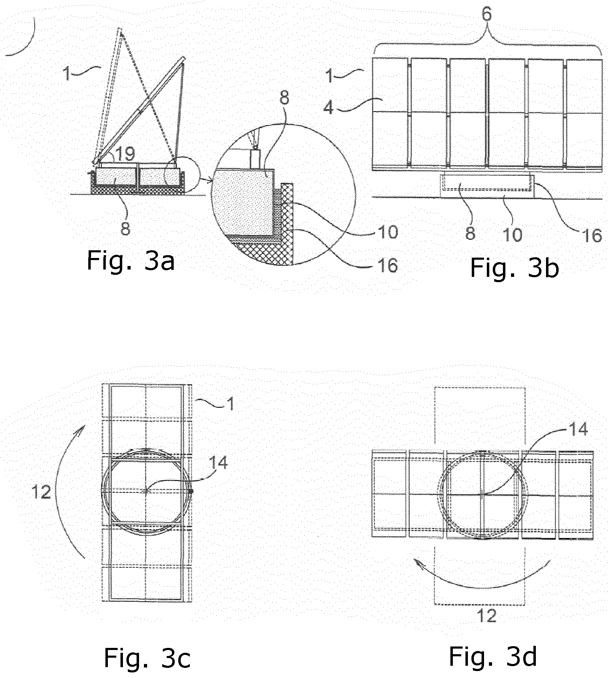

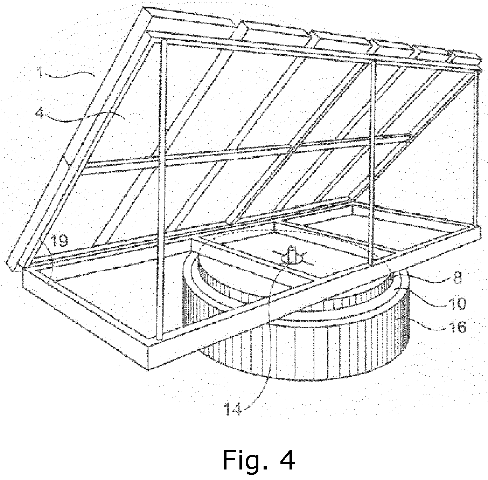

Referring now to Figures 1-6, 9, and 11-14, there is provided several different energy harvesting units 1 embodied as an onshore solar cell unit, i.e., a solar cell unit placed on land, including both dryland and wetland. The energy harvesting unit 1 comprises one or more solar modules 6, each module 6 comprising one or more solar panels 4 (In Figure 1 e.g., shown with eight solar panels 4, and twelve solar panels 4 in Figure 3), each solar panel 4 preferably comprising a plurality of solar cells (not shown). The energy harvesting unit 1 also comprises a tank or liquid reservoir (these terms may be used interchangeably) 16 holding a liquid 10. The tank 16 is in Figures 1 and 2 configured as a circular gutter, and in Figures 3-6, 9, and 11-14 as a circular tank. These configurations allow for easier guidance of the solar panel 4 (alternatively, or in combination, a transverse flow wind turbine) during rotation. To keep the solar panel 4 (alternatively a transverse flow wind turbine or a combination of both) floating on the liquid 10 within the tank 16, the energy harvesting unit 1 also comprises a chassis 8. The chassis 8 is adapted for floating a) on the surface of said liquid 10 or b) within said liquid 10. The chassis is made of a material or a combination of materials with an average density of less than that of the fluid 10. Non-limiting examples of such materials may be air- or foam-filled buoyancy members, or buoyancy members made of a foam (e.g., an insulation foam) of a polymeric material, such as extruded (XPS) or expanded (EPS) polystyrene. The chassis 8 may comprise one or more buoyancy members as e.g., seen in Figure 2b, where four arc-shaped buoyancy members are shown (also denoted 8). A part of the chassis 8 that is in contact with the fluid is preferably of a shape corresponding to the shape of the tank 16, thereby allowing it to fit therein. This is e.g., illustrated in Figures 1c and 2b. The energy harvesting unit 1 preferably comprises a motor unit (not shown) operably connected to the chassis 8, thereby functioning as a positioning means adapted for rotating said chassis 8 on the surface of said liquid and/or within said liquid, preferably about a vertical axis, more preferably about a central axis 14, relative to the surface of said liquid (horizontal plane 12), thereby being able to change the position of the solar cell and/or the transverse flow wind turbine relative to the sun, or relative to the direction of the wind, respectively.

As illustrated, the solar panels 4 may be positioned, automatically or manually, in different angles 19 relative to solar radiation.

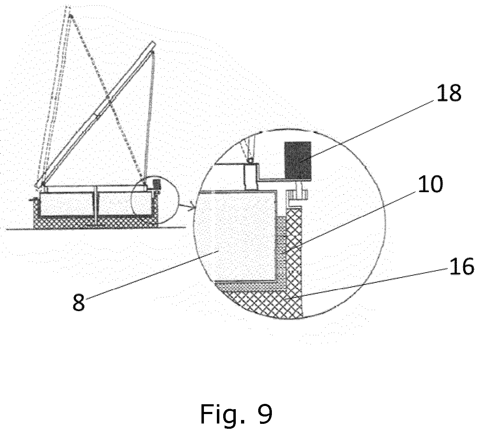

In some embodiments, the chassis 8 is supported by the sides of the tank 16, e.g., as seen in Figure 9, where a guide bracket 18 keeps the chassis in place within the tank 16. In some cases, the tank 16 is emptied for liquid 10, such as during extreme weather conditions or storms. The energy harvesting unit 1 may in such cases comprise a pump unit (not shown) adapted for delivering liquid 10 to and/or removing liquid 10 from said tank 16, preferably via a liquid storage tank (not shown), optionally also being part of the energy harvesting unit 1. In some embodiments, the tank 16 comprises a plurality of compartments that are separated from one another, such as an inner tank and an outer tank, e.g., ringshaped/annular tanks 17 (see e.g., Figures 1a-e). This may be advantageous to stabilize the chassis when it is rotated.

As seen for instance in Figure 1c, a solid foundation may be placed below the tank 16 for stabilization thereof, such as a concrete foundation.

Annular tanks 16, 17 are particularly preferred, since this configuration is considered to be more stable and require less liquid, such as water. The annular tanks 17, and the tanks 16 in general, may e.g., be made of polymers, such as polyethylene, polypropylene, or polyurethane, steel, such as stainless steel, or coated steel, or concrete.

For larger systems, it may be beneficial to apply a centrally positioned guide rod 26 rotatably connected to the chassis and attached to the ground 32 (see Figure 2a) or to a bottom of the tank 16 (see Figure 3a), such as a rotational central attachment point, fastened to the ground.

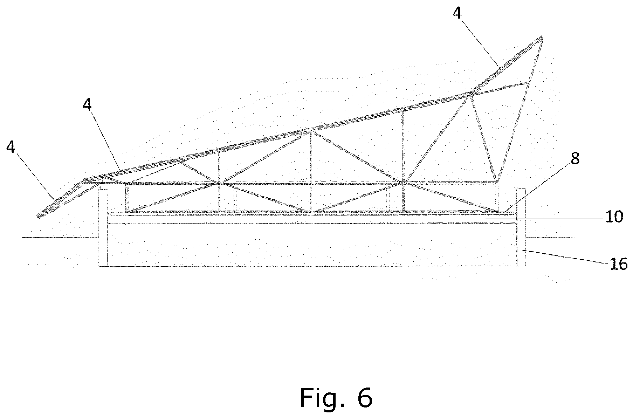

In some embodiments, the chassis and/or one or more of the solar panels 4 extend beyond the tank as e.g., shown in Figures 6, 7 and 11.

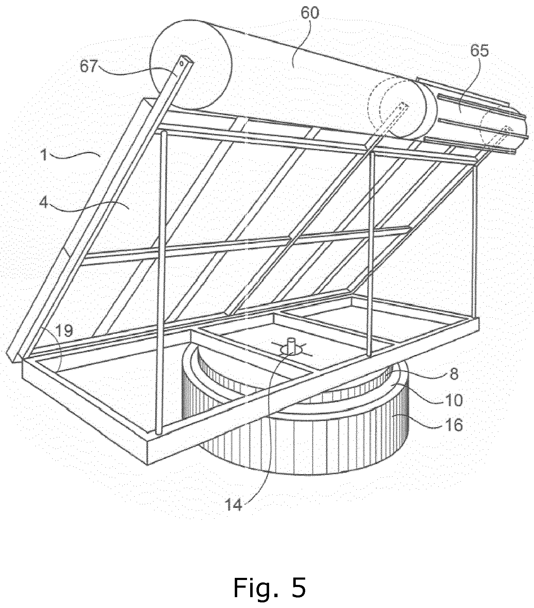

Fig. 5 illustrates a perspective view of an energy harvesting unit in accordance with various embodiments of the invention, where both solar panels 4 and transverse flow wind turbines 60, 65 are present. Here, the solar panels 4 are positioned such that (incoming) wind is directed towards the transverse flow wind turbines 60, 65.

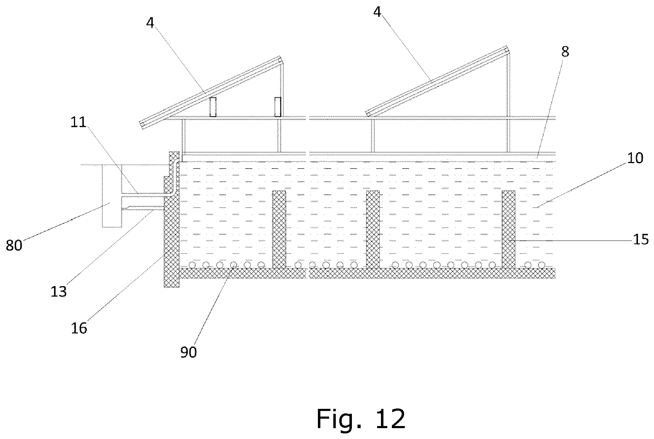

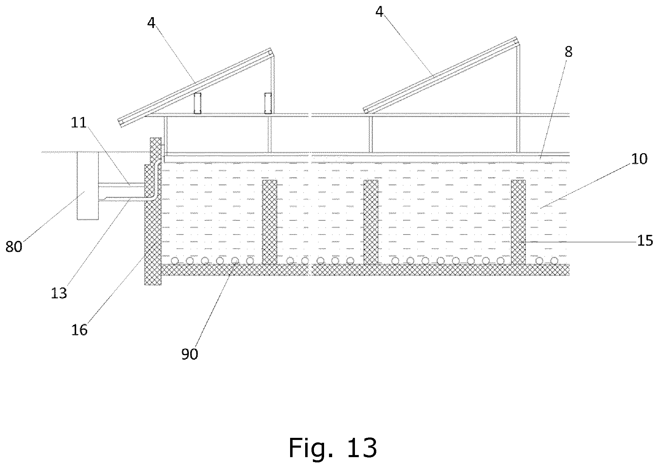

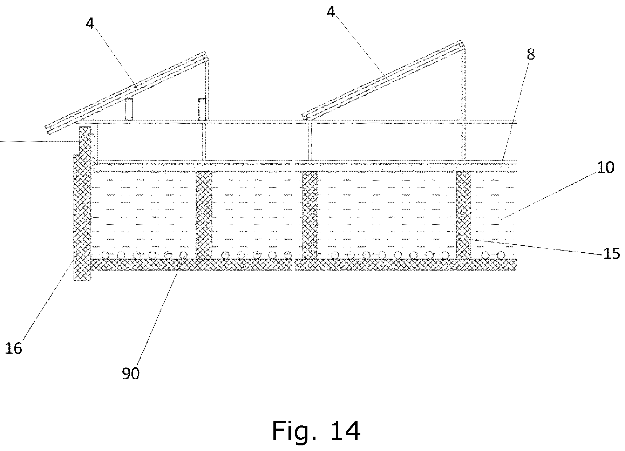

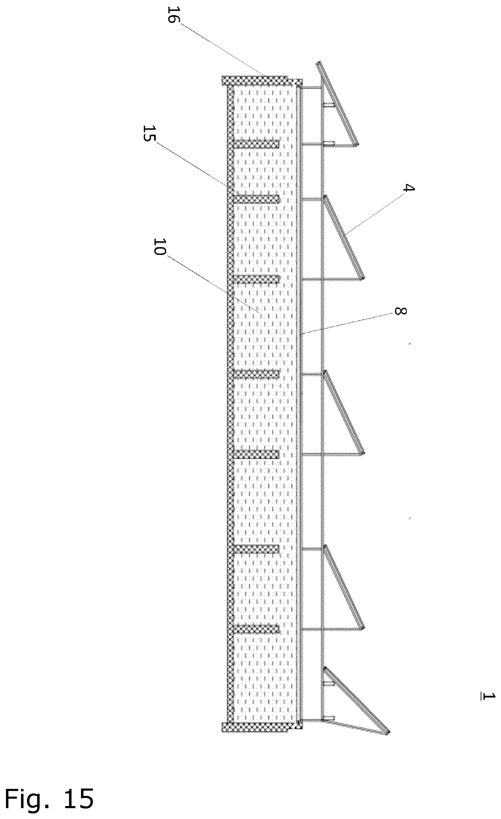

Figure 11 illustrates a top view of an energy harvesting unit in accordance with various embodiments of the invention, and Figures 12-15 illustrate cross-sectional side views of an energy harvesting unit in accordance with various embodiments of the invention and of the type shown in Figure 11. The tank 16 is here adapted for receiving and storing rainwater, i.e., collected rainwater e.g., collected from a roof construction via a gutter system (not shown) and into the tank 16. To avoid overflow, the tank 16 is provided with a tank overflow outlet 11, here operably connected to a rainwater sewer system 80. In this way, sewage and rainwater may be divided into two separate pipe systems, also called a separate sewer system. Sewage can then be led away via a closed system to the treatment plant instead of ending up in the environment, while rainwater can be led to detention basins and watercourses. By separating the systems, it is possible to deal with small amounts of water rather than large, uncontrollable accumulations. In Figure 12, the level of the rainwater 10 within the tank 16 has just reached the tank overflow outlet 11. A second tank outlet 13, also operably connected to the rainwater sewer system 80, is positioned at a lower level than the tank overflow outlet 11. The second tank outlet 13 is dimensioned with a flow capacity being substantially lower than that of the tank overflow outlet 11 as this outlet is present to slowly lower the rainwater level even further. This has to be performed slowly to avoid putting pressure on the rainwater sewer system 80 that could otherwise fail to function. Another cross-sectional view is seen in Figure 13, where the rainwater level has now reached the level of the second tank outlet 13. It is also seen that the chassis 8 follows the rainwater level. If necessary, e.g., during maintenance, or if the water is needed for e.g., firefighting, the rainwater level can be lowered even further, e.g., either by pump means, or via another even lower positioned outlet, preferably with a valve operatively connected thereto (to open and close the outlet when needed). To avoid damaging the solar cells 4, if such are extending beyond the tank 16, the tank 16 is here shown comprising a plurality of support structures, here embodied as walls 15 or pillars. These structures 15 extend upwards from the bottom of the tank 16 and are adapted for supporting the chassis 8 if the water level in the tank 16 falls below a preset depth. The preset depth is obviously here defined by the height of the support structures 15. In Figure 14, the chassis 8 is shown resting on the support structures 15, and in Figure 15, the chassis 8 is shown in an elevated position due to the elevated rainwater level.

Figures 12-14 also show a part of a closed-loop geothermal heat pump system 90, i.e., a part of its tubing, usually made of a high-density plastic-type tubing. Just like other heat pumps, a closed-loop geothermal heat pump system can heat, cool, and, if so equipped, supply the house with hot water. The closed-loop geothermal heat pump system 90 can here utilize the tank with (rain)water, with relatively constant temperature, as the exchange medium instead of the outside air temperature. Most closed-loop geothermal heat pumps circulate an antifreeze solution through a closed loop tubing that is buried in the ground or submerged in water. A heat exchanger transfers heat between the refrigerant in the heat pump and the antifreeze solution in the closed loop. Here, a part of the tubing may also be placed in the ground below and/or next to the tank.

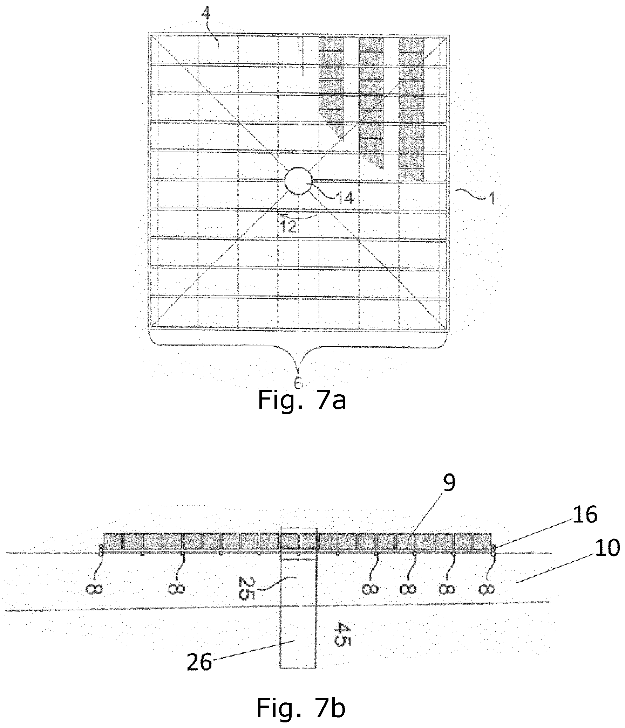

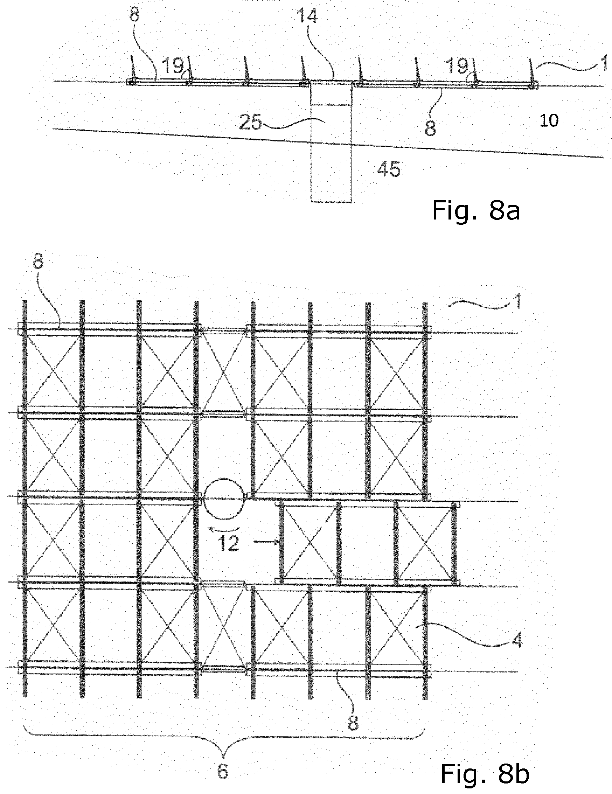

Referring now to Figures 7a-7b, there is provided an energy harvesting unit 1 embodied as an offshore solar cell unit, i.e., a solar cell unit placed at sea or at a lake. The energy harvesting unit 1 comprises a solar module comprising 70 solar panels 4 (the number of modules and panels are merely exemplary), each solar panel 4 preferably comprising a plurality of solar cells (not shown). The energy harvesting unit 1 also comprises a tank or liquid reservoir (these terms may be used interchangeably) 16 holding a liquid 10. Compared to the other described embodiments, this embodiment is specifically utilizing the sea or lake water as liquid 10, and the tank 16 has open walls, e.g., porous, or simply with holes or slits, thereby allowing the water to enter the tank cavity. Alternatively, the tank may be configured without a bottom wall, i.e., open-ended in the bottom. In some embodiments, the tank is the lake or the sea. In some embodiments, the tank is adapted for floating in water. The energy harvesting unit 1 may comprise an anchor adapted for releasably fastening the energy harvesting unit 1 to the bottom of the sea or lake. Alternatively, the energy harvesting unit 1 may comprise a centrally positioned guide rod 26 rotatably connected to the chassis and attached to the sea- or lakebed 45 (see Figures 8a and 8b). Here, the chassis 8 is also shown with numerous interconnected buoyancy members 9. If e.g., interconnected with flexible connectors, such as rope or wire, the chassis 8 will better respond to waves.

Offshore solar units 1 of the present invention may be of particular importance due to the reflection of solar radiation on water. Particularly, when calm waters are present, the benefits are numerous. Accordingly, the one or more solar modules 6 and/or one or more solar panels 4 is further configured to utilize solar radiation from water reflected solar radiation, thereby increasing the energy output considerably. This may be accomplished by using solar panels with bifacial components. Bifacial solar panels are known to a person skilled in the art. Preferably, the bifacial solar panels are tiltably adjustable, thereby being adjustable to the incident angle of the sunlight.

Referring now to Figures 8a-8b, there is provided an energy harvesting unit 1 embodied as an offshore solar cell unit, similar to the one shown in Figures 7a-7b. Here, individual solar panels 4 is displaceable relative to one another in a horizontal plane and along the chassis 8. Here, solar panels 4, e.g., grouped in multiple solar modules, are configured to be slidably moved relative to the chassis 8. The individual solar modules could also or alternatively be displaceable relative to one another in a horizontal plane and along the chassis 8.

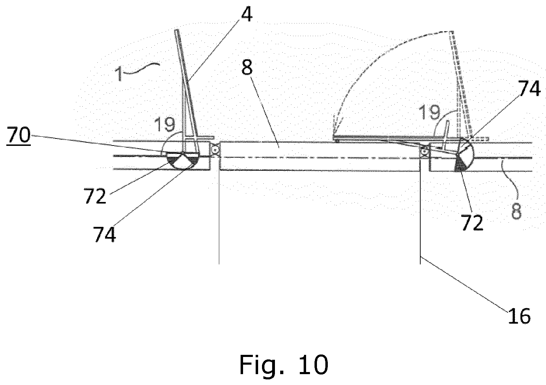

In Figure 10, an example of a solar panel alignment means 70 is shown. This embodiment is suitable for both onshore and offshore embodiments. The solar panel alignment means 70 is operably connected to a solar panel to be able to change the tilt angle of the latter. The solar panel alignment means 70 is here shown comprising a first chamber 72 and a second chamber 74. A pump unit (not shown) is configured to distribute fluid (depicted as the black coloration) from one chamber to the other or vice versa in order to change the tilt angle of the solar panel 4. The solar panel alignment means 70 is here shown with a rounded bottom configured to roll from one side to the other on a surface of the chassis 8. The chassis could comprise a guide cavity adapted for receiving the bottom of the solar panel alignment means 70. The solar panel alignment means 70 could be shaped as an elongate gutter, where the first and second chambers 72, 74 are closed, such that the fluid cannot escape the solar panel alignment means 70, but where the first and second chambers 72, 74 are in fluid communication with one another via a pump unit (not shown). Hence, when the fluid is pumped into one of the chambers, the solar panel alignment means 70 turns to that side, thereby tilting the solar panel to that direction as e.g., seen in the right side of Figure 10. In the left side of Figure 10, the chambers 72, 74 contain the same amount of fluid, why the solar panel alignment means 70 is stabilized in a middle position. The advantage of such embodiments is that the solar panel alignment means is capable of absorbing some of the forces of an incoming wind. Furthermore, if the weather is too violent, it is possible to lower the solar panels to horizontal, thereby avoiding the forces of the wind.

### References

- 1: Energy harvesting unit
- 4: Solar panel
- 6: Solar module
- 8: Chassis
- 9: Buoyancy members
- 10: Liquid
- 11: Tank overflow outlet
- 12: Horizontal plane
- 13: Second tank outlet
- 14: Central axis
- 15: Support structure
- 16: Tank/liquid reservoir
- 17: Annular tank/liquid reservoir
- 18: Guide bracket
- 19: Angle
- 20: Buoyancy member stopper
- 25/26: Guide rod
- 32: Ground
- 40: Side edge
- 45: Sea- or lakebed
- 60: Transverse flow wind turbine
- 65: Transverse flow wind turbine
- 67: Chassis
- 70: Solar panel alignment means
- 72: First chamber
- 74: Second chamber
- 80: Sewer
- 90: Part of ground heating system

## Claims

1. An energy harvesting unit (1) comprising:
- a tank (16) with walls defining a cavity and an upper edge, the tank comprising a liquid (10), such as water, within its cavity, said liquid defining a substantially horizontal surface within the cavity of said tank;
- a chassis (8) adapted for floating a) on the surface of said liquid and/or b) within said liquid;
- a solar panel (4) and/or a transverse flow wind turbine (60, 65) operably mounted to said chassis (8); and
- positioning means adapted for rotating said chassis (8) on the surface of said liquid (10) and/or within said liquid (10) about a vertical axis, preferably about a central axis, relative to the surface of said liquid (10), thereby being able to change the position of the solar panel (4) and/or the transverse flow wind turbine (60, 65) relative to the sun or relative to the direction of the wind, respectively;
**characterized in that** the tank (16) is circular in shape, and the chassis (8) is adapted for floating and rotating about a central vertical axis within the tank (16).

2. The energy harvesting unit (1) according to claim 1, comprising both a solar panel (4) and a transverse flow wind turbine (60, 65) operably mounted to said chassis (8); the energy harvesting unit (1) further comprising a control unit configured to instruct the positioning means to position the solar panel (4) and transverse flow wind turbine (60, 65) in a specific direction in response to received data selected from the group consisting of: weather conditions, weather forecasts, time of day, date, current produced amount of energy of the solar panel (4), average produced amount of energy of the solar panel (4) within a pre-determined time period, current produced amount of energy of the transverse flow wind turbine (60, 65), average produced amount of energy of the transverse flow wind turbine (60, 65) within a pre-determined time period, and wind speed.

3. The energy harvesting unit (1) according to claim 2, wherein the control unit is configured to prioritize the production of energy with the solar panel (4) until the production falls below a preset threshold value.

4. The energy harvesting unit (1) according to any one of the claims 2-3, wherein the transverse flow wind turbine (60, 65) is positioned above the solar panel (4).

5. The energy harvesting unit (1) according to claim 4, wherein the solar panel (4) is positioned such that incoming wind is directed towards the transverse flow wind turbine (60, 65).

6. The energy harvesting unit (1) according to any one of the claims 1-5, wherein the tank (16) is adapted for receiving and storing rainwater, preferably for reuse.

7. The energy harvesting unit (1) according to claim 6, wherein the tank (16) comprises a tank overflow outlet, preferably operably connected to a rainwater sewer system.

8. The energy harvesting unit (1) according to claim 7, wherein the tank (16) comprises a second tank outlet, preferably operably connected to a rainwater sewer system, positioned at a lower level than the tank overflow outlet, wherein said second tank outlet is dimensioned with a flow capacity being substantially lower than that of the tank overflow outlet.

9. The energy harvesting unit (1) according to any one of the claims 1-8, wherein the chassis (8) is of a shape corresponding to the shape of the tank (16), and wherein the chassis (8) is adapted for covering the mayor part of the surface area of said liquid (10), such as at least 90% of the surface area of said liquid (10), thereby being able to rotate unhindered within said tank (16).

10. The energy harvesting unit (1) according to any one of the claims 6-9, wherein the chassis (8) is adapted for floating freely, such as without any anchoring means, a) on the surface of said liquid and/or b) within said liquid.

11. The energy harvesting unit (1) according to any one of the claims 6-10, wherein the tank (16) comprises one or more support structures extending upwards from the bottom of the tank (16), said support structures adapted for supporting the chassis (8) if the water level in the tank (16) falls below a preset depth.

12. The energy harvesting unit (1) according to any one of the claims 1-11, wherein the tank (16) is adapted for positioning at least partly underground.

13. The energy harvesting unit (1) according to any one of the claims 1-11, wherein the tank (16) is a slurry tank.

14. The energy harvesting unit (1) according to any one of the claims 1-13, wherein the positioning means is mounted to the upper edge of the tank (16) and operably connected to the chassis (8).

15. The energy harvesting unit (1) according to any one of the claims 1-14, wherein the positioning means is configured for back-and-forth rotational movement of the chassis (8), said movement mimicking the sun path.

16. The energy harvesting unit (1) according to any one of the claims 1-15, wherein the chassis (8) is coated with a solar reflective material, such as a white coating, or made from a solar reflective material, and wherein said solar panel (4) is bifacial.

17. The energy harvesting unit (1) according to any one of the claims 1-16, wherein at least a part of the chassis (8) is configured as a service platform for a technician to walk and stand on.

18. The energy harvesting unit (1) according to any one of the claims 1-17, further comprising a solar panel alignment means (70) operably connected to a solar panel (4), wherein said solar panel alignment means (70) comprises a first chamber (72), a second chamber (74), and a pump unit, wherein said pump unit is configured to distribute fluid from one chamber (72, 74) to the other chamber (74, 72), or vice versa, in order to change the tilt angle of said solar panel (4).

## Patentansprüche

1. Energiegewinnungseinheit (1), umfassend:
- einen Behälter (16) mit Wänden, die einen Hohlraum definieren, und einer Oberkante, wobei der Behälter eine Flüssigkeit (10), wie beispielsweise Wasser, innerhalb seines Hohlraums umfasst, wobei die Flüssigkeit eine im Wesentlichen horizontale Oberfläche innerhalb des Hohlraums des Behälters definiert;
- ein Chassis (8), das dazu angepasst ist, a) auf der Oberfläche der Flüssigkeit und/oder b) innerhalb der Flüssigkeit zu schwimmen;
- ein Solarpaneel (4) und/oder eine Querstromwindkraftanlage (60, 65), das/die betriebsfähig an dem Chassis (8) montiert ist; und
- Positionierungsmittel, das dazu angepasst ist, das Chassis (8) auf der Oberfläche der Flüssigkeit (10) und/oder innerhalb der Flüssigkeit (10) um eine vertikale Achse, vorzugsweise um eine Mittelachse, relativ zur Oberfläche der Flüssigkeit (10) zu drehen, um dadurch in der Lage zu sein, die Position des Solarpaneels (4) und/oder der Querstromwindkraftanlage (60, 65) relativ zur Sonne bzw. relativ zur Windrichtung zu ändern;
**dadurch gekennzeichnet, dass** der Behälter (16) kreisförmig ist und das Chassis (8) dazu angepasst ist, innerhalb des Behälters (16) zu schwimmen und um eine zentrale vertikale Achse in diesem zu rotieren.

2. Energiegewinnungseinheit (1) nach Anspruch 1, umfassend sowohl ein Solarpaneel (4) als auch eine Querstromwindkraftanlage (60, 65), die betriebsfähig an dem Chassis (8) montiert sind; wobei die Energiegewinnungseinheit (1) ferner eine Steuereinheit umfasst, die dazu konfiguriert ist, das Positionierungsmittel anzuweisen, das Solarpaneel (4) und die Querstromwindkraftanlage (60, 65) als Reaktion auf empfangene Daten in einer spezifischen Richtung zu positionieren, wobei die Daten ausgewählt sind aus der Gruppe bestehend aus: Wetterbedingungen, Wettervorhersagen, Tageszeit, Datum, einer aktuell erzeugten Energiemenge des Solarpaneels (4), einer durchschnittlich erzeugten Energiemenge des Solarpaneels (4) innerhalb eines vorgegebenen Zeitraums, einer aktuell erzeugten Energiemenge der Querstromwindkraftanlage (60, 65), einer durchschnittlich erzeugten Energiemenge der Querstromwindkraftanlage (60, 65) innerhalb eines vorgegebenen Zeitraums und Windgeschwindigkeit.

3. Energiegewinnungseinheit (1) nach Anspruch 2, wobei die Steuereinheit dazu konfiguriert ist, die Erzeugung von Energie mit dem Solarpaneel (4) zu priorisieren, bis die Erzeugung unter einen voreingestellten Schwellenwert fällt.

4. Energiegewinnungseinheit (1) nach einem der Ansprüche 2-3, wobei die Querstromwindkraftanlage (60, 65) oberhalb des Solarpaneels (4) positioniert ist.

5. Energiegewinnungseinheit (1) nach Anspruch 4, wobei das Solarpaneel (4) derart positioniert ist, dass einfallender Wind in Richtung der Querstromwindkraftanlage (60, 65) geleitet wird.

6. Energiegewinnungseinheit (1) nach einem der Ansprüche 1-5, wobei der Behälter (16) dazu angepasst ist, Regenwasser aufzunehmen und zu speichern, vorzugsweise zur Wiederverwendung.

7. Energiegewinnungseinheit (1) nach Anspruch 6, wobei der Behälter (16) einen Behälterüberlaufauslass umfasst, der vorzugsweise betriebsfähig mit einem Regenwasser-Kanalisationssystem verbunden ist.

8. Energiegewinnungseinheit (1) nach Anspruch 7, wobei der Behälter (16) einen zweiten Behälterauslass umfasst, der vorzugsweise betriebsfähig mit einem Regenwasser-Kanalisationssystem verbunden ist und auf einem niedrigeren Niveau als der Behälterüberlaufauslass positioniert ist, wobei der zweite Behälterauslass mit einer Durchflusskapazität dimensioniert ist, die im Wesentlichen niedriger ist als diejenige des Behälterüberlaufauslasses.

9. Energiegewinnungseinheit (1) nach einem der Ansprüche 1-8, wobei das Chassis (8) eine Form aufweist, die der Form des Behälters (16) entspricht, und wobei das Chassis (8) dazu angepasst ist, den Hauptteil der Oberfläche der Flüssigkeit (10) abzudecken, wie beispielsweise mindestens 90 % der Oberfläche der Flüssigkeit (10), um dadurch in der Lage zu sein, ungehindert innerhalb des Behälters (16) zu rotieren.

10. Energiegewinnungseinheit (1) nach einem der Ansprüche 6-9, wobei das Chassis (8) dazu angepasst ist, frei zu schwimmen, wie beispielsweise ohne jegliche Verankerungsmittel, a) auf der Oberfläche der Flüssigkeit und/oder b) innerhalb der Flüssigkeit.

11. Energiegewinnungseinheit (1) nach einem der Ansprüche 6-10, wobei der Behälter (16) eine oder mehrere Stützstrukturen umfasst, die sich vom Boden des Behälters (16) nach oben erstrecken, wobei die Stützstrukturen dazu angepasst sind, das Chassis (8) zu stützen, wenn der Wasserspiegel im Behälter (16) unter eine voreingestellte Tiefe fällt.

12. Energiegewinnungseinheit (1) nach einem der Ansprüche 1-11, wobei der Behälter (16) dazu angepasst ist, zumindest teilweise unterirdisch positioniert zu werden.

13. Energiegewinnungseinheit (1) nach einem der Ansprüche 1-11, wobei der Behälter (16) ein Güllebehälter ist.

14. Energiegewinnungseinheit (1) nach einem der Ansprüche 1-13, wobei das Positionierungsmittel an der Oberkante des Behälters (16) montiert und betriebsfähig mit dem Chassis (8) verbunden ist.

15. Energiegewinnungseinheit (1) nach einem der Ansprüche 1-14, wobei das Positionierungsmittel für eine Hin- und Her-Rotationsbewegung des Chassis (8) konfiguriert ist, wobei die Bewegung den Sonnenlauf nachahmt.

16. Energiegewinnungseinheit (1) nach einem der Ansprüche 1-15, wobei das Chassis (8) mit einem sonnenreflektierenden Material beschichtet ist, wie beispielsweise einer weißen Beschichtung, oder aus einem sonnenreflektierenden Material hergestellt ist, und wobei das Solarpaneel (4) bifazial ist.

17. Energiegewinnungseinheit (1) nach einem der Ansprüche 1-16, wobei zumindest ein Teil des Chassis (8) als Serviceplattform konfiguriert ist, auf der ein Techniker gehen und stehen kann.

18. Energiegewinnungseinheit (1) nach einem der Ansprüche 1-17, ferner umfassend ein Solarpaneel-Ausrichtungsmittel (70), das betriebsfähig mit einem Solarpaneel (4) verbunden ist, wobei das Solarpaneel-Ausrichtungsmittel (70) eine erste Kammer (72), eine zweite Kammer (74) und eine Pumpeneinheit umfasst, wobei die Pumpeneinheit dazu konfiguriert ist, Fluid von einer Kammer (72, 74) in die andere Kammer (74, 72) oder umgekehrt zu verteilen, um den Neigungswinkel des Solarpaneels (4) zu ändern.

## Revendications

1. Unité de récupération d'énergie (1) comprenant :
- un réservoir (16) avec des parois délimitant une cavité et un bord supérieur, le réservoir comprenant un liquide (10), tel que de l'eau, au sein de sa cavité, ledit liquide définissant une surface sensiblement horizontale au sein de la cavité dudit réservoir ;
- un châssis (8) conçu pour flotter a) à la surface dudit liquide et/ou b) à l'intérieur dudit liquide ;
- un panneau solaire (4) et/ou une éolienne à flux transversal (60, 65) montés de manière fonctionnelle sur ledit châssis (8) ; et
- un moyen de positionnement conçu pour faire tourner ledit châssis (8) à la surface dudit liquide (10) et/ou à l'intérieur dudit liquide (10) autour d'un axe vertical, de préférence autour d'un axe central, par rapport à la surface dudit liquide (10), permettant ainsi de modifier la position du panneau solaire (4) et/ou de l'éolienne à flux transversal (60, 65) par rapport au soleil ou par rapport à la direction du vent, respectivement ;
**caractérisée en ce que** le réservoir (16) est de forme circulaire et **en ce que** le châssis (8) est conçu pour flotter et tourner autour d'un axe vertical central à l'intérieur du réservoir (16).

2. Unité de récupération d'énergie (1) selon la revendication 1, comprenant à la fois un panneau solaire (4) et une éolienne à flux transversal (60, 65) montés de manière fonctionnelle sur ledit châssis (8) ; l'unité de récupération d'énergie (1) comprenant en outre une unité de commande configurée pour ordonner au moyen de positionnement de positionner le panneau solaire (4) et l'éolienne à flux transversal (60, 65) dans une direction spécifique en réponse à des données reçues sélectionnées dans le groupe constitué par : des conditions météorologiques, des prévisions météorologiques, l'heure de la journée, la date, la quantité d'énergie actuellement produite par le panneau solaire (4), la quantité moyenne d'énergie produite par le panneau solaire (4) au cours d'une période prédéterminée, la quantité d'énergie actuellement produite par l'éolienne à flux transversal (60, 65), la quantité moyenne d'énergie produite par l'éolienne à flux transversal (60, 65) au cours d'une période prédéterminée et la vitesse du vent.

3. Unité de récupération d'énergie (1) selon la revendication 2, dans laquelle l'unité de commande est configurée pour prioriser la production d'énergie par le panneau solaire (4) jusqu'à ce que la production chute en dessous d'une valeur de seuil prédéfinie.

4. Unité de récupération d'énergie (1) selon l'une quelconque des revendications 2-3, dans laquelle l'éolienne à flux transversal (60, 65) est positionnée au-dessus du panneau solaire (4).

5. Unité de récupération d'énergie (1) selon la revendication 4, dans laquelle le panneau solaire (4) est positionné de telle sorte que le vent entrant soit dirigé vers l'éolienne à flux transversal (60, 65).

6. Unité de récupération d'énergie (1) selon l'une quelconque des revendications 1 à 5, dans laquelle le réservoir (16) est conçu pour recevoir et stocker l'eau de pluie, de préférence à des fins de réutilisation.

7. Unité de récupération d'énergie (1) selon la revendication 6, dans laquelle le réservoir (16) comprend une sortie de trop-plein de réservoir, de préférence reliée de manière fonctionnelle à un système de réseau d'eaux pluviales.

8. Unité de récupération d'énergie (1) selon la revendication 7, dans laquelle le réservoir (16) comprend une seconde sortie de réservoir, de préférence reliée de manière fonctionnelle à un système de réseau d'eaux pluviales, positionnée à un niveau inférieur à celui de la sortie de trop-plein de réservoir, dans laquelle ladite seconde sortie de réservoir est dimensionnée avec une capacité de débit sensiblement inférieure à celle de la sortie de trop-plein de réservoir.

9. Unité de récupération d'énergie (1) selon l'une quelconque des revendications 1 à 8, dans laquelle le châssis (8) a une forme correspondant à la forme du réservoir (16), et dans laquelle le châssis (8) est conçu pour couvrir la majeure partie de la surface dudit liquide (10), telle qu'au moins 90 % de la surface dudit liquide (10), ce qui lui permet ainsi de tourner sans entraves à l'intérieur dudit réservoir (16).

10. Unité de récupération d'énergie (1) selon l'une quelconque des revendications 6 à 9, dans laquelle le châssis (8) est conçu pour flotter librement, tel que sans aucun moyen d'ancrage, a) à la surface dudit liquide et/ou b) à l'intérieur dudit liquide.

11. Unité de récupération d'énergie (1) selon l'une quelconque des revendications 6 à 10, dans laquelle le réservoir (16) comprend une ou plusieurs structures de support s'étendant vers le haut à partir du fond du réservoir (16), lesdites structures de support étant conçues pour supporter le châssis (8) si le niveau d'eau dans le réservoir (16) chute en dessous d'une profondeur prédéfinie.

12. Unité de récupération d'énergie (1) selon l'une quelconque des revendications 1 à 11, dans laquelle le réservoir (16) est conçu pour être positionné au moins en partie sous terre.

13. Unité de récupération d'énergie (1) selon l'une quelconque des revendications 1 à 11, dans laquelle le réservoir (16) est un réservoir d'une suspension épaisse.

14. Unité de récupération d'énergie (1) selon l'une quelconque des revendications 1 à 13, dans laquelle le moyen de positionnement est monté sur le bord supérieur du réservoir (16) et relié de manière fonctionnelle au châssis (8).

15. Unité de récupération d'énergie (1) selon l'une quelconque des revendications 1 à 14, dans laquelle le moyen de positionnement est configuré pour un mouvement de rotation d'avant en arrière du châssis (8), ledit mouvement imitant la trajectoire du soleil.

16. Unité de récupération d'énergie (1) selon l'une quelconque des revendications 1 à 15, dans laquelle le châssis (8) est recouvert d'un matériau réfléchissant solaire, tel qu'un revêtement blanc, ou est composé d'un matériau réfléchissant solaire, et dans laquelle ledit panneau solaire (4) est bifacial.

17. Unité de récupération d'énergie (1) selon l'une quelconque des revendications 1 à 16, dans laquelle au moins une partie du châssis (8) est configurée comme une plateforme de service sur laquelle un technicien peut marcher et se tenir debout.

18. Unité de récupération d'énergie (1) selon l'une quelconque des revendications 1 à 17, comprenant en outre un moyen d'alignement de panneau solaire (70) relié de manière fonctionnelle à un panneau solaire (4), dans laquelle ledit moyen d'alignement de panneau solaire (70) comprend une première chambre (72), une seconde chambre (74) et une unité de pompe, dans laquelle ladite unité de pompe est configurée pour distribuer le fluide d'une chambre (72, 74) à l'autre chambre (74, 72), ou vice versa, afin de modifier l'angle d'inclinaison dudit panneau solaire (4).
